# EUROPEAN PATENT SPECIFICATION

(11) **EP 2 343 769 B1**
(45) Date of publication and mention of the grant of the patent: **11.07.2018**
(21) Application number: 10195759.5
(22) Date of filing: 17.12.2010
(51) Int. Cl.: H01M 10/60

(54) **Apparatus for heating and cooling a battery and sub-assembly of vehicle drive batteries**
Vorrichtung zum Heizen und Kühlen einer Batterie und Fahrzeugantriebsbatteriebaugruppe
Appareil de chauffage et de refroidissement d'une batterie et sous-ensemble de batteries de traction de véhicule

(30) Priority: 18.12.2009 DE 102009058810
(43) Date of publication of application: 13.07.2011
(73) Proprietor: Valeo Klimasysteme GmbH, 96476 Rodach (DE)
(72) Inventor: Haussmann, Roland, 69168, Wiesloch (DE)
(74) Representative: Metz, Gaëlle

(56) References cited:
- EP-A1- 2 104 121
- DE-A1- 2 638 862
- US-A- 5 731 568
- US-A1- 2007 285 051
- US-A1- 2008 292 945
- US-A1- 2009 253 028

## Description

The invention relates to an apparatus for heating and cooling a battery, preferably a vehicle drive battery with a plurality of battery cells, as well as with a sub-assembly of vehicle drive batteries with a vehicle drive battery and an apparatus for heating and cooling the battery.

Vehicle drive batteries for purely electric, fuelcell or hybrid vehicles are at the centre of the development of alternatively driven vehicles. The service life of the battery depends to a considerable degree upon the temperature stressing of the battery cells during the charging and discharging procedure. This applies in particular to lithium-ion batteries and NiMH batteries. In order to retain the capacity of the battery, it is necessary to prevent the battery cells from being heated or heating themselves above their maximum temperature of from 45°C to 60°C. For this purpose, cooling apparatus for vehicle drive batteries are known in which the vehicle drive battery is cooled by way of a coolant circuit.

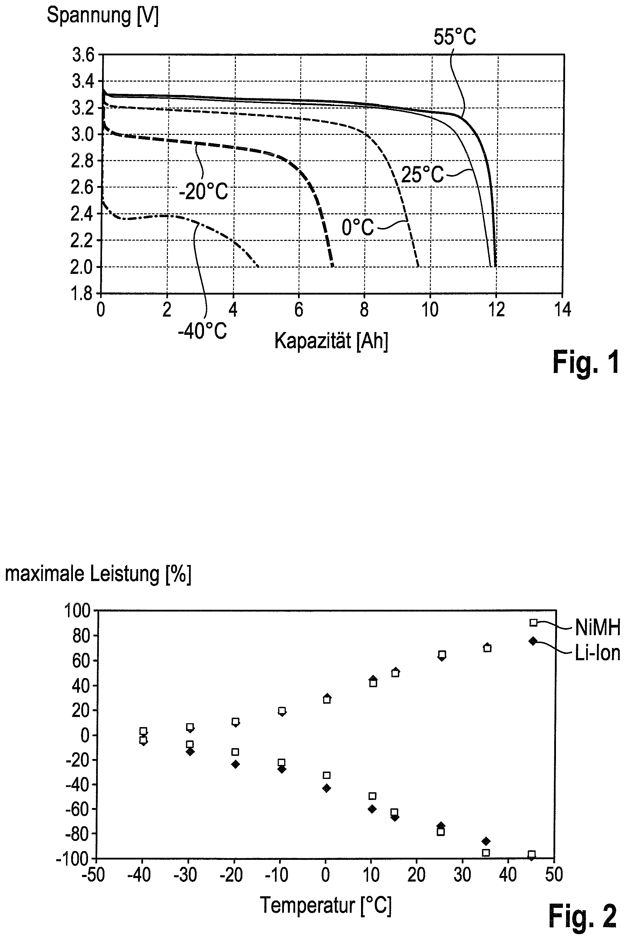

Since a vehicle drive battery in the vehicle is subjected to a wide range of ambient temperatures, for example caused by the seasons, in the case of cold ambient temperatures in particular during winter the battery may be operated at cold temperatures. As shown by the diagram in figure 1, the voltage and capacity of the battery are significantly reduced as compared with higher temperatures. The maximum permissible charging and discharging capacity at different temperatures for lithium-ion batteries and NiMH batteries is indicated in figure 2. The maximum permissible capacity becomes smaller as temperatures drop, in which case for example a charging procedure or an acceleration procedure of the vehicle is not possible at temperatures below 0°C under normal driving conditions.

The object of the invention is to provide an apparatus for heating and cooling a battery, which is designed in a compact manner and with low weight, as well as a sub-assembly of vehicle drive batteries which is characterized by a long service capacity on account of its good battery cooling and heating.

This is achieved by an apparatus for heating and cooling a battery according to claim 1. The apparatus has a coolant circuit which comprises at least one coolant line, at least one electrical heating element and at least one common heat-transfer component for the heat transfer between the battery and the coolant line and the electrical heating element. In this way the apparatus can heat or cool the battery by way of the at least one common heat-transfer component, depending upon whether the electrical heating element or the coolant circuit is active. Since the coolant circuit and the electrical heating element can be operated independently of each other, a rapid and precise setting of the cooling capacity or heating capacity is possible and, in particular, a rapid change between the heating function and the cooling function of the apparatus. Since the heat-transfer component is provided for the heat transfer both in the cooling function and in the heating function of the apparatus, the heat-transfer component can be coupled to the battery in an optimally thermally conductive manner. The apparatus thus permits a good performance both when cooling and when heating the battery, whilst the apparatus itself can be made compact and with a small structural space and a low weight.

It is preferable for the coolant line and/or the heating element to contact the heat-transfer component directly and preferably to rest pre-stressed against it. This ensures a satisfactory heat transfer between the coolant line and/or the heating element and the heat-transfer component. The pre-stressing can be carried out by a resilient pressing force of the coolant line or the heating element or the heat-transfer component. As the coolant line and/or the heating element rest pre-stressed against the heat-transfer component, thermally insulating air gaps between the coolant line and the heat-transfer component and between the heating element and the heat-transfer component are prevented.

The at least one common heat-transfer component can be connected to the at least one electrical heating element and/or at least one coolant line in a positively or non-positively locking manner.

In order to improve the heat transfer between the heat-transfer component and the electrical heating element and/or the coolant line, a thermally conductive paste can be provided between the heat-transfer component and the electrical heating element.

In accordance with a preferred embodiment a plurality of heat-transfer components, in particular those which are associated with a common coolant line, have a common electrical heating element. In this way the number of the heating elements required can be reduced in the case of an apparatus with a plurality of heat-transfer components, as a result of which in particular the electrical connection of the heating elements is simplified. If a plurality of heat-transfer components are associated in each case with one common coolant line and one common electrical heating element, then the control of the heating and cooling apparatus is simplified.

In particular, the electrical heating element is embedded in a tubular jacket, preferably of stainless steel. An electrical heating element of this type has a high mechanical loading capacity.

In accordance with a preferred embodiment the apparatus is constructed in the form of a cooling base which is designed in such a way that it rests flat against a flat side of the battery and which has a holding means for the at least one coolant line and the at least one electrical heating element. A design of the apparatus in the form of a cooling base permits a highly compact design of the apparatus and is suitable, in particular, for novel battery cells in which a cooling is possible by way of only one flat side, for example the lower end wall.

It is preferable for the cooling base to be made resilient towards the flat side of the battery. In this way the formation of thermally insulating air gaps between the cooling base and the flat side of the battery is prevented.

The heat-transfer component can be designed in the form of an extruded section or profile. The production by extrusion permits a simple production of the heat-transfer component and a polygonal geometry of the profile.

The heat-transfer component can have two thermal conduction ribs on the side facing away from the battery, which are in thermally conductive contact with the electrical heating element, the distance between the thermal conduction ribs being selected in such a way that a pressing contact is preferably formed between the thermal conduction ribs and the electrical heating element. Thermal conduction ribs of this type permit a good thermally conductive contact between the heat-transfer component and the heating element. The pressing contact between the thermal conduction ribs and the heating element ensure a lasting thermally conductive contact.

It is preferable for the thermal conduction ribs to be shaped round at least in part in order to permit a fastening of the heating element with positive locking. The connection with positive locking improves the fastening of the heating elements on the heat-transfer component, and the thermally conductive contact region between the heating element and the thermal conduction ribs is increased.

The electrical heating element extends for example in a U shape, in which case in particular the two arms of the U-shaped heating element are associated with different heat-transfer components in each case.

It is possible for the heat-transfer component to engage around the electrical heating element locally. In this way the thermally conductive contact area between the heat-transfer component and the electrical heating element is increased.

In accordance with a preferred embodiment the heat-transfer component is a contact plate.

The cooling base and/or the contact plate should be a pre-fabricated, self-supporting unit.

In accordance with a preferred embodiment the heat-transfer component is designed in the form of a resilient part and, in the state not fastened to the battery, convex towards the outside on the outer side thereof facing the battery. If a heat-transfer component of this type is pressed with a specified force against a flat side of the battery, then the outer side of the heat-transfer component facing the battery is pre-stressed in a resilient manner flat against the flat side of the battery, as a result of which thermally insulating air gaps between the heat-transfer component and the battery are prevented.

The invention also relates, as already indicated in the introduction, to a sub-assembly of vehicle drive batteries, with a vehicle drive battery which comprises a plurality of cylindrical battery cells arranged adjacent to one another and with an external face, an upper end wall and a lower end wall, the battery having a flat side, and an apparatus according to the invention for heating and cooling the vehicle drive battery. The apparatus rests with the at least one heat-transfer component against the flat side of the battery.

A plurality of battery cells can be combined to form a pre-fabricated unit in the form of a group of battery cells. The battery as a whole can optionally be formed from a plurality of battery cell groups.

It is preferable for only one heat-transfer component to extend directly on the underside of one battery cell or one battery cell group in each case, one battery cell group being a pre-fabricated unit formed from a plurality of battery cells, in which case a coolant supply, a coolant return and an electrical heating element extend along below each battery cell group, so that all the battery cells of a battery cell group are cooled to substantially the same temperature.

It is not necessary to be dependent upon a plurality of contact plates per group of battery cells for cooling, but rather upon only one contact plate. Alternatively, a plurality of contact plates can be provided whilst forming a common contact surface for at least one group of battery cells.

The apparatus should, in particular, be positioned on the side of the battery facing away from the electrical terminals of the battery. If the upper end wall is the side on which the two poles of the battery are present, the lower end wall should then be the cooled side of the battery.

There are a multiplicity of different possibilities for achieving a uniform pressing force. For example the heat-transfer component can be fastened to a housing of the battery and can be pressed by the fastening against a flat side of the battery. In this case the heat-transfer component presses resiliently against the flat side of the battery, a base plate of the battery or directly against the battery cells.

In certain cases a base plate may be necessary on mechanical grounds just when a sub-assembly is formed, so that the base plate is situated between the batteries and the heat-transfer component or components. The base plate should of course consist of highly thermally conductive material.

Another embodiment provides that the apparatus has provided under it a pressing plate which is preferably fastened to the battery and by which the apparatus is compressed and resiliently deformed between the battery and the pressing plate by way of a sort of sandwich design as it were.

It should be emphasized that the above individual features can naturally be combined with one another as desired.

In the figures
- Figure 1 shows voltage and charging curves of a vehicle drive battery at different temperatures;
- Figure 2 shows the maximum permissible charging and discharging capacity of a battery at different temperatures;
- Figure 3 shows a group of battery cells of a sub-assembly of vehicle drive batteries according to the invention;
- Figure 4 is a diagrammatic sectional view of a heat-transfer component of an apparatus for heating and cooling a battery in accordance with a first embodiment of the invention;
- Figure 5 is a diagrammatic sectional view of a sub-assembly of vehicle drive batteries according to the invention with two heat-transfer components as shown in figure 4;
- Figure 6 shows a heat-transfer component of the apparatus as shown in figure 4;
- Figure 7 is a detailed view of a heating element of the apparatus as shown in figure 4;
- Figure 8 is a more detailed sectional view of the heating element on the heat-transfer component as shown in figure 7;
- Figure 9 is a perspective view of a sub-assembly of vehicle drive batteries with an apparatus for heating and cooling the battery in accordance with a second embodiment of the invention;
- Figure 10 is a perspective view of an apparatus for heating and cooling a battery in accordance with a second embodiment of the invention;
- Figure 11 is a perspective view of the apparatus as shown in figure 10;
- Figure 12 is a diagrammatic sectional view of a sub-assembly of vehicle drive batteries according to the invention with an apparatus for heating and cooling the battery in accordance with a third embodiment of the invention;
- Figure 13 is a diagrammatic sectional view of a fourth embodiment of the sub-assembly of vehicle drive batteries according to the invention and the apparatus;
- Figure 14 is a detailed view of the electrical heating element of the apparatus as shown in figure 13;
- Figure 15 is a plan view of a cooling base of an apparatus as shown in figure 13;
- Figure 16 is a perspective view of an apparatus for heating and cooling a battery in accordance with a fifth embodiment of the invention.

Vehicle drive batteries are used as energy stores for driving electric motors, for example in electric or hybrid vehicles.

A vehicle drive battery comprises a plurality of battery cells which are coupled to one another electrically. For simple handling of the vehicle drive battery a plurality of battery cells can be arranged in a group of battery cells, in which case a plurality of groups of battery cells together form the vehicle drive battery.

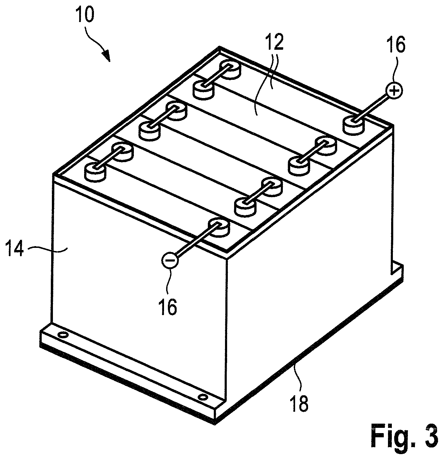

A battery cell group 10, in which six battery cells 12 are arranged in a common housing 14, is shown in figure 3.

The battery cells 12 are made cuboid and have an external face as well as an upper and lower end wall.

In addition, the battery cells 12 are connected to one another electrically on the top side of the battery cell group 10 and have a common electrical terminal 16. The underside of the battery cell group 10 is a flat side 18 which is made thermally conductive and by way of which a cooling or heating of all the battery cells 12 of the battery cell group 10 by the lower end walls of the cells is possible.

Alternatively, it is also possible for other battery cell groups 10 or individual battery cells 12 to be provided, for example those in which flat sides of the battery cells 12, i.e. for example the lower end walls thereof, are themselves made thermally conductive for the individual cooling of the battery cell 12.

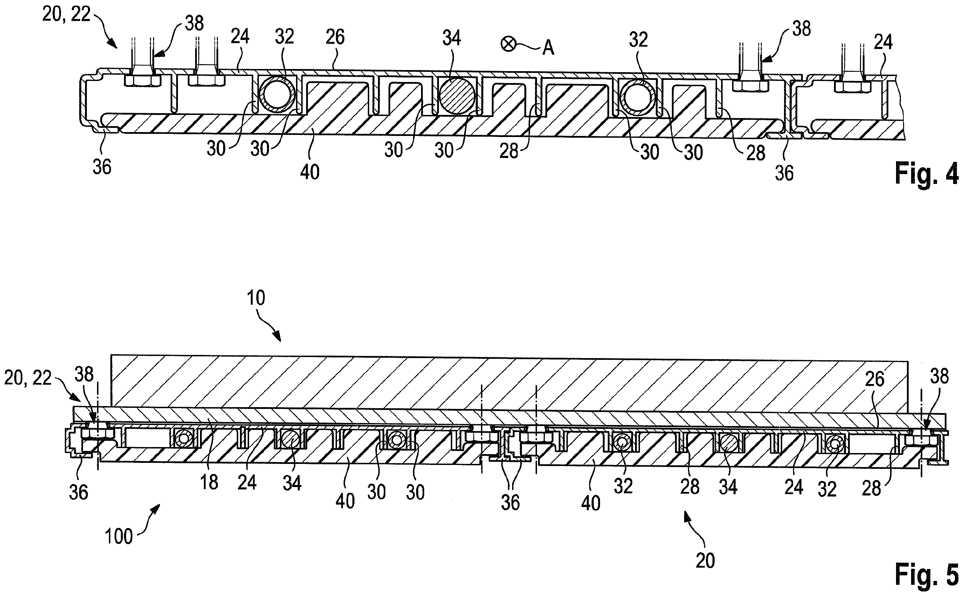

An apparatus 20 for heating and cooling the battery cell group 10 of the vehicle drive battery is shown in a diagrammatic sectional view in figure 4.

The apparatus 20 is designed in the form of a cooling base 22 which can rest flat against the flat side 18 of the battery cell group 10. The cooling base 22 comprises a heat-transfer component 24 which is designed in the form of a contact plate and which has an extruded profile of constant cross-section formed along an axis A extending parallel to the flat side 18 of the battery cell group 10.

The heat-transfer component 24 consists of a material with a high degree of thermal conductivity, for example aluminium or copper, aluminium being preferred on account of its low weight.

The heat-transfer component 24 comprises a contact top side 26 with which the heat-transfer component 24 rests against the flat side 18 of the battery. A plurality of reinforcement ribs 28, which extend axially and which reinforce the heat-transfer component 24 in particular against bending with respect to the axial direction, are provided on the underside of the heat-transfer component 24 which is situated opposite the contact top side 26.

Furthermore, three pairs of thermal conduction ribs 30 are provided which form holding means for coolant lines 32 and an electrical heating element 34. In this case the thermal conduction ribs 30 are designed in such a way that a good heat transfer between the coolant line 32 and the heat-transfer component 24 and between the electrical heating element 34 and the heat-transfer component 24 is possible.

The heat-transfer component 24 has an edge profile 36 on the left-hand and right-hand edge of the heat-transfer component 24. The two edge profiles 36 reinforce the mechanical structure of the heat-transfer component 24 on the one hand and are made complementary to each other in each case on the other hand, so that similar adjacent heat-transfer components 24 engage in one another with their edge profiles 36 in a positively locking manner.

Parts of a second heat-transfer component 24 of this type are shown on the right-hand edge of figure 4.

On account of the engagement of the adjacent heat-transfer components 24 in one another in a positively locking manner, the two contact top sides 26 are joined to form a large common contact surface in an aligned manner. In this way a large common contact surface is provided, whereas the individual heat-transfer components 24 are relatively small and can thus be produced more simply by extrusion than correspondingly larger heat-transfer components. Furthermore, a plurality of small heat-transfer components 24 can adapt more easily to the flat side 18 which is never completely plane.

A thermal conduction between adjacent heat-transfer components 24 is possible by way of the mutually adjacent edge profiles 36 of the heat-transfer components 24, as a result of which an average temperature and an average cooling or cooling capacity is produced between adjacent heat-transfer components 24.

In order to improve the heat transfer between the coolant lines 32, the electrical heating element 34 and the respective thermal conduction ribs 30, or between adjacent heat-transfer components 24 which abut against one another by way of their edge profiles 36 in a positively locking manner, it is possible for a thermally conductive paste to be provided between the corresponding components.

The heat-transfer components 24 are connected to the flat side 18 of the battery cell group 10 by way of fastening apparatus 38. In the embodiment shown in figure 4, the fastening apparatus 38 are bolt fastenings with which the heat-transfer components 24 are fastened directly to the flat side 18 of the battery cell group 10.

A thermal insulation component 40, which is connected to the heat-transfer component 24 in a positively locking manner, is provided on the side of the heat-transfer components 24 opposite the battery cell group 10. To this end the thermal insulation component 40 engages in the edge profiles 36 of the heat-transfer component 24. Recesses are provided in the thermal insulation component 40 for the reinforcement ribs 28, coolant lines 32, the electrical heating element 34 and the thermal conduction ribs 30, as well as the bolts of the fastening apparatus 38. The thermal insulation component 40 can also be fastened in a different manner to the heat-transfer component 24, for example by way of the fastening apparatus 38.

Figure 5 shows a sub-assembly 100 of vehicle drive batteries which is formed from a battery cell group 10 with a flat side 18 and an apparatus 20 for heating and cooling the vehicle drive battery. The apparatus 20 comprises two heat-transfer components 24 which engage in each other in a positively locking manner and which are designed in a manner similar to the heat-transfer component 24 shown in figure 4.

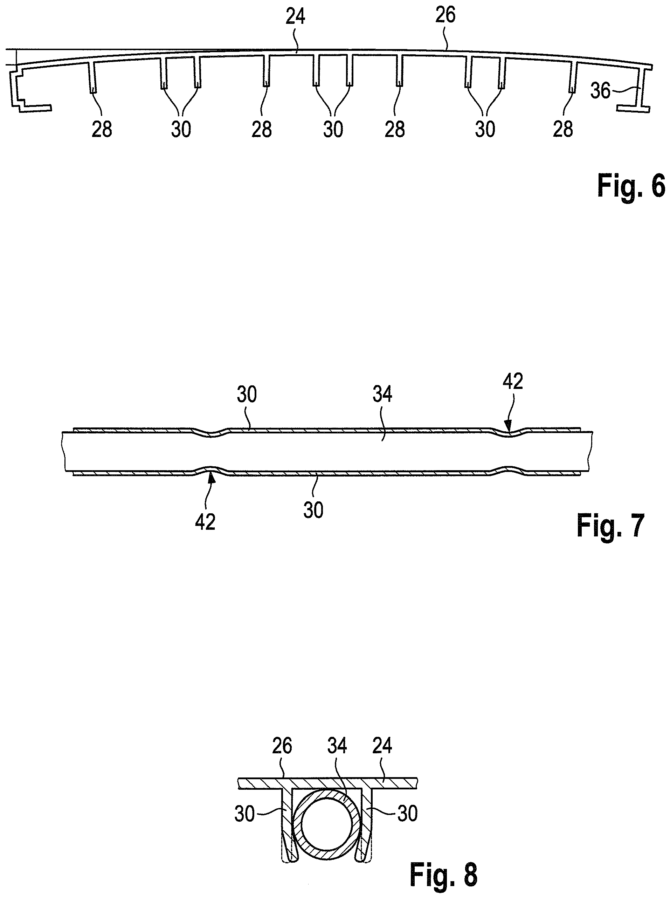

Figure 6 shows the heat-transfer component 24 without further components of the apparatus 20.

The heat-transfer component 24 is made resilient and in the state not fastened to the flat side 18 of the battery cell group 10 it extends in a convex manner with respect to the flat side 18 of the battery, in which case it preferably has a constant thickness. The contact top side 26 extends in a curved manner, the middle region of the heat-transfer component 24 being in particular up to 5 mm higher than the lateral edge of the contact top side 26.

If the heat-transfer component 24 shaped in this way (as shown in figure 5) is bolted onto the flat side 18 of the battery cell group 10 by way of the fastening apparatus 38, then the heat-transfer component 24 will rest substantially flat against the flat side 18 of the battery cell group 10 and will be resiliently pre-stressed. In this way, air gaps between the heat-transfer component 24 and the flat side 18 of the battery cell group 10 are prevented.

In accordance with the embodiment shown in figure 4, the coolant lines 32 are designed in the form of separate tubes, the thermal conduction ribs 30 forming a holding means for the coolant lines 32.

Figure 5 shows an electrical heating element 34 which is surrounded on both sides by the thermal conduction ribs 30 of the heat-transfer component 24. The distance between the thermal conduction ribs 30 is selected in such a way that a pressing contact is formed between the thermal conduction ribs 30 and the electrical heating element 34. The electrical heating element 34 is connected to the heat-transfer component 24 by way of the pressing contact in a non-positively locking manner, whilst at the same time a heat transfer is made possible by way of the pressing contact.

In the embodiment shown in figure 7 two fastening points 42 are provided, at which the thermal conduction ribs 30 are shaped round in the direction of the electrical heating element 34 in order to permit a connection with positive locking between the electrical heating element 34 and the heat-transfer component 24 at these fastening points 42.

Figure 6 is a sectional view of a fastening point 42 at which the thermal conduction ribs 30 are curved on both sides in the direction of the electrical heating element 34. It is also possible for only one of the thermal conduction ribs 30 to be curved in the direction of the electrical heating element 34 or for the thermal conduction ribs 30 to be curved along their entire length in the direction of the electrical heating element 34.

The coolant lines 32 are fastened to the thermal conduction ribs 30 associated with them, in a manner similar to the electrical heating element 34.

The heating element 34 can be designed in different ways. In the embodiment shown, the electrical heating element 34 is a heating coil which is wound cylindrically and which is embedded in a thermally conductive and electrically insulating manner in a tubular jacket of stainless steel. The heating element 34 thus has a high degree of mechanical stability.

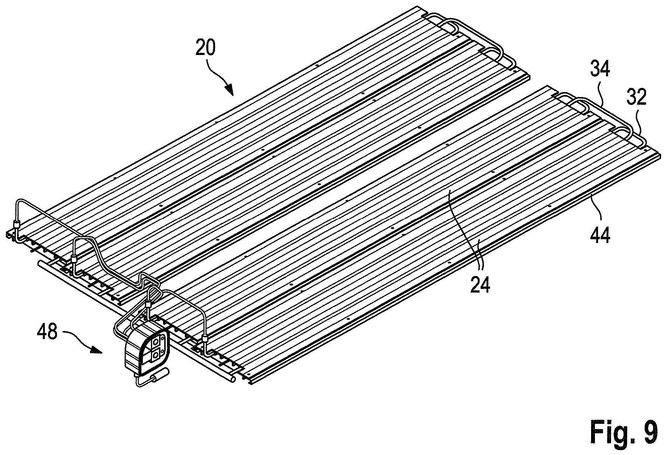

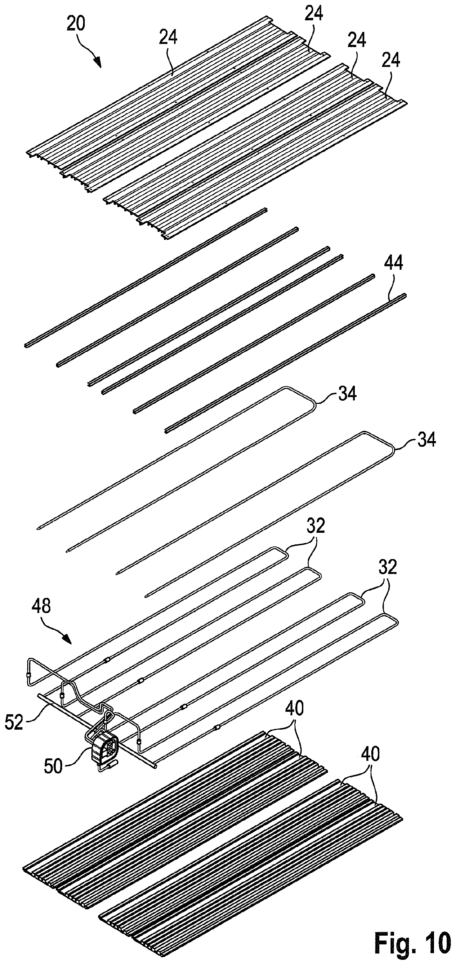

Figure 9 shows a second embodiment of the apparatus 20 for heating and cooling, in which case four heat-transfer components 24 are provided. Figure 10 shows the same apparatus 20 in an exploded view.

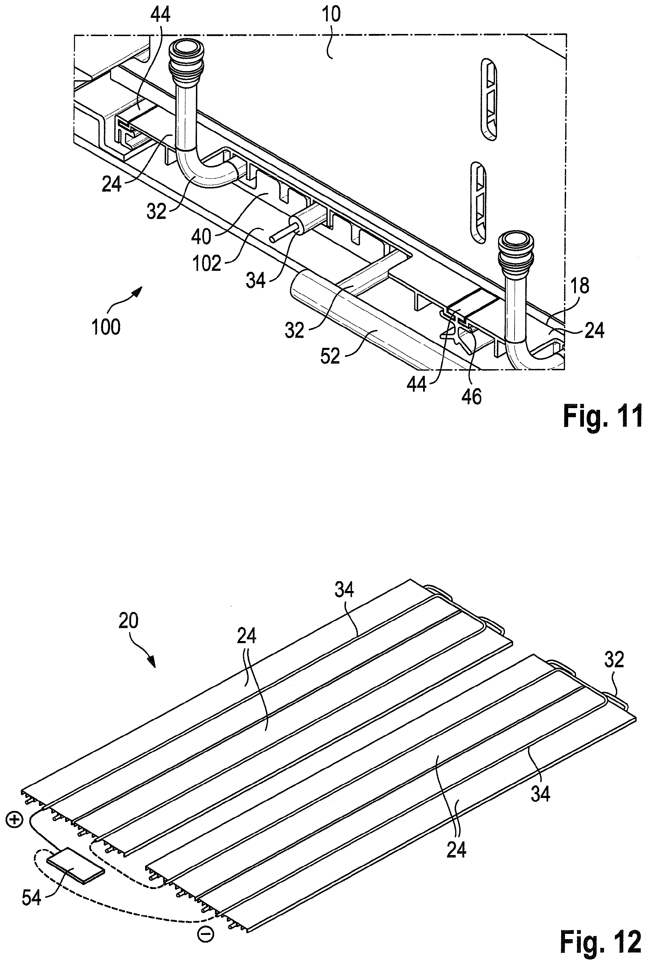

Four heat-transfer components 24 are provided, which are connected by way of their edge profiles 36 to six fastening rails 44. The fastening rails 44 form the fastening apparatus 38 for fastening the heat-transfer components 24 to the flat side 18 of the battery cell group 10. The fastening rails 44 in each case comprise extensions 46 by which they are connected to the edge profile 36 of the heat-transfer component 24 in a positively locking manner (cf. figure 11).

As is clearly evident from the exploded view shown in figure 10, one U-shaped electrical heating element 34 is provided for two adjacent heat-transfer components 24 in each case. One arm of the U-shaped heating element 34 is associated in each case with one heat-transfer component 24, the two heat-transfer components 24 which are associated with a U-shaped heating element 34 being situated adjacent to each other. The two arms of the U-shaped heating element 34 can be connected to each other in a rigid or flexible manner, for example by way of a cable.

A coolant duct system 48 is provided which has four coolant lines 32 which are connected in parallel and which are connected to one another by way of a coolant distributor 50 and a common collecting line 52. The coolant circuit is closed by way of a refrigerating machine (not shown).

A thermal insulation component 40 is provided for each heat-transfer component 24.

Figure 11 is a detailed view of a sub-assembly 100 of vehicle drive batteries with the apparatus 20 for heating and cooling the battery as shown in figure 9. The apparatus 20 is clamped between a pressing plate 102 of the sub-assembly 100 of vehicle drive batteries and the flat side 18 of the battery cell group 10, the fastening rails 44 defining a fixed distance between the flat side 18 and the pressing plate 102. The pressing plate 102 presses the fastening rails 44 in the direction of the flat side 18 of the battery cell group 10, the fastening rails 44 in turn pressing the heat-transfer components 24 against the flat side 18 of the battery cell group 10 until the latter rests flat and pre-stressed against the flat side 18. Corresponding bolts are not shown.

The distance between the flat side 18 of the battery and the pressing plate 102 is set to be such that a thermal insulation component 40 can be arranged between the pressing plate 102 and the heat-transfer component 24 as well as the coolant line 32 and the electrical heating element 34.

Figure 12 is a diagrammatic view of the apparatus 20 as shown in figure 9 with an electrical terminal. The two U-shaped heating elements 34 are connected in series with each other, so that only one electrical terminal with the symbolized +/- poles is necessary for the apparatus 20 as a whole. An electrical control element 54 is provided which regulates the current supply of the electrical heating elements 34.

Alternatively, the electrical heating elements 34 can be attached in such a way that a separate control of an individual heating element 34 is possible.

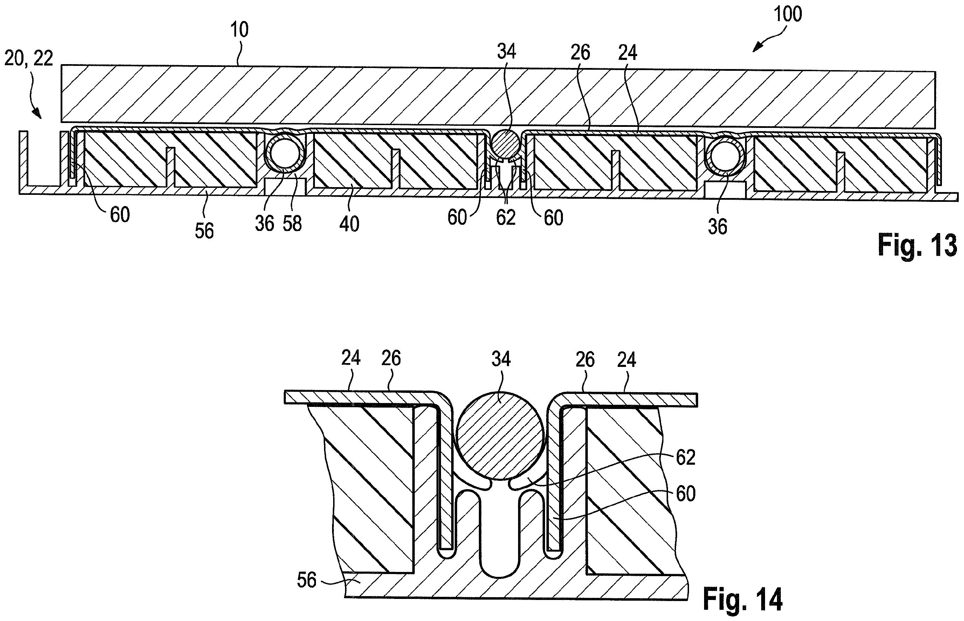

Figure 13 shows a further embodiment of the apparatus 20 for heating and cooling the battery cell group 10. The apparatus 20 comprises a cooling base 22 with a support component 56 which is designed in the form of a ribbed hollow body in which a U-shaped holding means 58 for a coolant line 32 is moulded out. The cavities formed by the support component 56 form a thermal insulation, one thermal insulation component 40 being provided in each case in a plurality of cavities in the support component 56.

A heat-transfer component 24 in the form of a contact plate rests on the top side of the coolant line 32. The heat-transfer component 24 is a shaped metal sheet of a highly thermally conductive material.

The abutment face of the heat-transfer component 24 forms a first heat-transfer zone for the heat transfer between the heat-transfer component 24 and the coolant line 32. The shaping of the heat-transfer component 24 is adapted to the external periphery of the coolant line 32 in order to maximize the area of the first heat-transfer zone.

A thermally conductive paste which improves the heat transfer between the two components is optionally provided between the coolant line 32 and the heat-transfer component 24.

The heat-transfer component 24 extends from the first heat-transfer zone in the middle in an angled manner on both sides towards the outside, as a result of which a slight V shape is formed.

Adjacent to the first heat-transfer zone the heat-transfer component 24 has a contact top side 26 which is arranged on both sides of the heat-transfer zone.

At the ends of the heat-transfer component 24 at a distance from the coolant line 32 the heat-transfer component 24 is bent over in the direction of the support component 56 and forms two tongues 60 angled at the rear. The tongues 60 project into slots in the support component 56 which form mountings for the tongues 60, which constitute a guide during a vertical movement of the heat-transfer component 24.

The heat-transfer component 24 is made resilient. The apparatus 20 is attached to the battery cell group 10 in such a way that all the heat-transfer components 24 are resiliently pre-stressed against the flat side 18 of the battery cell group 10. In this case the heat-transfer components 24 rest with the contact top side 26 substantially flat and with the entire area thereof on the flat side 18 of the battery cell group 10 with as large a contact face as possible.

The cooling base 22 can be fastened directly to the battery cell group 10, for example by way of bolt connections which press the support component 56 against the flat side 18 of the battery cell group 10 and thus stress the heat-transfer component 24 against the flat side 18 of the battery cell group 10.

On account of the pre-stressing of the heat-transfer component 24, the heat-transfer component 24 is pressed against the flat side 18 of the battery cell group 10 on the one hand and against the coolant line 32 on the other hand, thus ensuring a good heat transfer, since thermally insulating air gaps between the heat-transfer component 24 and the coolant line 32 and between the heat-transfer component 24 and the flat side 18 of the battery cell group 10 are prevented.

Alternatively, the cooling base 22 can be arranged between the flat side 18 of the battery cell group 10 and a pressing plate in a manner similar to the embodiment shown in figure 11, in which the battery cell group 10 is fastened to the pressing plate and the pressing plate stresses the cooling base 22 against the flat side 18 of the battery cell group 10. The pressing plate can be part of an external housing of the vehicle drive battery.

The support component 56 shown in figure 13 has two coolant lines 32 with two heat-transfer components 24 which are arranged parallel to each other. An electrical heating element 34, which is in thermally conductive contact with the two heat-transfer components 24, is arranged between the two heat-transfer components 24.

Figure 14 is a detailed view of the electrical heating element 34 and the two adjacent heat-transfer components 24 in the common support component 56.

The distance between the vertically extending tongues 60 of the two heat-transfer components 24 is selected in such a way that the heating element 34 is pressed in between the two heat-transfer components 24. The tongues 60 have contact portions 62 in which the tongues 60 are shaped round and rest against the heating element 34, as a result of which the heat transfer between the heating element 34 and the heat-transfer component 24 is improved. The contact portions 62 of the tongues 60 can also be formed in such a way that the heating element 34 is pressed directly against the flat side 18 of the battery cell group 10.

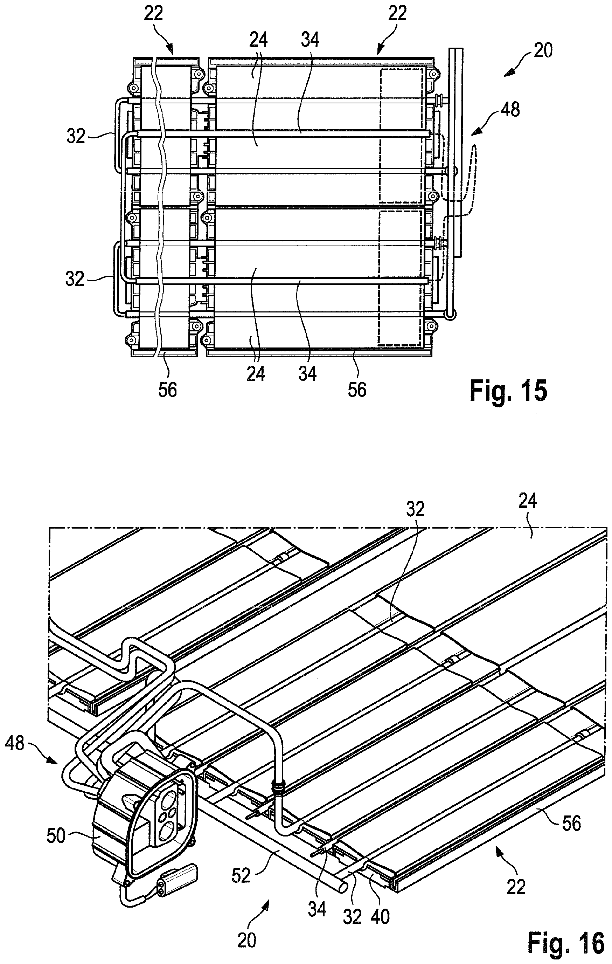

Figure 15 is a plan view of a cooling base 22 in which two pairs of heat-transfer components 24 with a common heating element 34 are provided in each case. Two adjacent coolant lines 32 in each case form a pair with a coolant supply line and a coolant return line.

In this case a battery cell group 10 is arranged in such a way that the flat side 18 thereof is connected to at least two heat-transfer components 24, which are associated with a coolant supply line and a coolant return line, as a result of which the cooling performance of the coolant supply line and the coolant return line is evened out.

In figure 15 a plurality of support components 56 are provided along the coolant lines 32 and the heating element 34, it being preferable for a support component 56 to be associated precisely with a battery cell group 10.

Figure 16 shows a fourth embodiment of the apparatus 20 which is designed in a manner substantially similar to the third embodiment and differs essentially only in the design of the support component 56. The support component 56 extends along the entire length of the coolant lines 32 and the heating element 34, in which case various heat-transfer components 24 are provided locally along the coolant lines 32. The four heat-transfer components 24 in the foreground are shown transparent for the sake of better visualization of the course of the coolant lines 32.

In contrast to the third embodiment the cavities of the support component 56 are arranged substantially on the side of the support component 56 facing away from the heat-transfer component 24, as a result of which the thermal insulation components 40 are provided on the side of the apparatus 20 opposite the battery cell group 10.

The support components 56 can be produced from plastics material, for example by injection moulding or extrusion.

The thermal insulation components 40 can be produced integrally in one piece with the support component 56 or in the form of separate components.

## Claims

1. An apparatus (20) for heating and cooling a battery, wherein the apparatus comprises at least one vehicle drive battery with a plurality of battery cells (12), a coolant circuit which comprises at least one coolant line (32), at least one electrical heating element (34) and at least one common heat-transfer component (24) for the heat transfer between the battery and the coolant line (32) and the electrical heating element (34), **characterized in that** the at least one common heat-transfer component (24) is connected to the at least one electrical heating element (34) and/or at least one coolant line (32) in a positively and/or non-positively locking manner, the heat-transfer component (24) having two thermal conduction ribs (30) on the side facing away from the battery, which being in thermally conductive contact with the electrical heating element (34), wherein the distance between the thermal conduction ribs (30) being selected in such a way that a pressing contact is preferably formed between the thermal conduction ribs (30) and the electrical heating element (34), the thermal conduction ribs (30) being shaped round at least in part in order to permit a fastening of the electrical heating element (34) on the heat-transfer component (24) with positive locking.

2. An apparatus (20) according to claim 1, **characterized in that** the coolant line (32) and/or the heating element (34) contacts or contact the heat-transfer component (24) directly and preferably rests or rest pre-stressed against it.

3. An apparatus (20) according to claim 1 or 2, **characterized in that** a thermally conductive paste is provided between the heat-transfer component (24) and the electrical heating element (34) and/or the coolant line (32).

4. An apparatus (20) according to any one of the preceding claims, **characterized in that** a plurality of heat-transfer components (24), in particular heat-transfer components (24) which are associated with a common coolant line (32), have a common electrical heating element (34).

5. An apparatus (20) according to any one of the preceding claims, **characterized in that** the electrical heating element (34) is embedded in a tubular jacket, preferably of stainless steel.

6. An apparatus (20) according to any one of the preceding claims, **characterized in that** the apparatus (20) is constructed in the form of a cooling base (22) which is designed in such a way that it rests flat against a flat side (18) of the battery and which has a holding means for the at least one coolant line (32) and the at least one electrical heating element (34).

7. An apparatus (20) according to claim 6, **characterized in that** the cooling base (22) is made resilient towards the flat side (18) of the battery.

8. An apparatus (20) according to claim 6 or 7, **characterized in that** the heat-transfer component (24) is designed in the form of an extruded section or profile.

9. An apparatus (20) according to any one of the preceding claims, **characterized in that** the electrical heating element (34) extends in a U shape, wherein in particular the two arms of the U-shaped heating element (34) are associated with different heat-transfer components (24) in each case.

10. An apparatus (20) according to any one of the preceding claims, **characterized in that** the heat-transfer component (24) engages around the electrical heating element (34) locally.

11. An apparatus (20) according to any one of the preceding claims, **characterized in that** the heat-transfer component (24) is a contact plate.

12. An apparatus (20) according to any one of the preceding claims, **characterized in that** the heat-transfer component (24) is designed in the form of a resilient part and, in the state not fastened to the battery, convex towards the outside on the outer side thereof facing the battery.

13. A sub-assembly (100) of vehicle drive batteries, with a vehicle drive battery which comprises a plurality of battery cells (12) arranged adjacent to one another and with an external face, an upper end wall and a lower end wall, wherein the battery has a flat side (18), and an apparatus (20) according to any one of the preceding claims, wherein the apparatus (20) rests with the at least one heat-transfer component (24) against the flat side (18) of the battery.

14. An sub-assembly (100) of vehicle drive batteries according to claim 13, **characterized in that** a heat-transfer component (24), in particular precisely one heat-transfer component (24), extends directly on the underside of one battery cell (12) or one battery cell group (10) in each case, wherein one battery cell group (10) is a pre-fabricated unit formed from a plurality of battery cells (12), and a coolant supply, a coolant return and an electrical heating element (34) extend along below each battery cell group (10).

15. An sub-assembly (100) of vehicle drive batteries according to claim 13 or 14, **characterized in that** the heat-transfer component (24) is fastened to a housing of the battery and is pressed by the fastening apparatus (38) against the flat side (18) of the battery, wherein the heat-transfer component (24) preferably presses resiliently against the flat side (18) of the battery, a base plate of the battery or the battery cells (12).

16. An sub-assembly (100) of vehicle drive batteries according to any one of claims 13 to 14, **characterized in that** the apparatus (20) has provided under it a pressing plate (102) which is preferably fastened to the battery and by which the apparatus (20) is resiliently deformed between the battery and the pressing plate (102).

## Patentansprüche

1. Vorrichtung (20) zum Heizen und Kühlen einer Batterie, wobei die Vorrichtung mindestens eine Fahrzeugantriebsbatterie mit mehreren Batteriezellen (12), einen Kühlmittelkreislauf, welcher mindestens eine Kühlmittelleitung (32) aufweist, mindestens ein elektrisches Heizelement (34) und mindestens eine gemeinsame Wärmeübertragungskomponente (24) für die Wärmeübertragung zwischen der Batterie und der Kühlmittelleitung (32) und dem elektrischen Heizelement (34) aufweist, **dadurch gekennzeichnet, dass** die mindestens eine gemeinsame Wärmeübertragungskomponente (24) mit dem mindestens einen elektrischen Heizelement (34) und/oder mindestens einer Kühlmittelleitung (32) auf eine formschlüssige und/oder kraftschlüssige Art verbunden ist, wobei die Wärmeübertragungskomponente (24) zwei Wärmeleitlamellen (30) auf der Seite, die von der Batterie weg gerichtet ist, aufweist, welche in wärmeleitendem Kontakt mit dem elektrischen Heizelement (34) stehen, wobei der Abstand zwischen den Wärmeleitlamellen (30) derart gewählt ist, dass ein Druckkontakt vorzugsweise zwischen den Wärmeleitlamellen (30) und dem elektrischen Heizelement (34) gebildet wird, wobei die Wärmeleitlamellen (30) mindestens teilweise rund geformt sind, um ein Befestigen des elektrischen Heizelements (34) auf der Wärmeübertragungskomponente (24) mit Formschluss zu erlauben.

2. Vorrichtung (20) nach Anspruch 1, **dadurch gekennzeichnet, dass** die Kühlmittelleitung (32) und/oder das Heizelement (34) die Wärmeübertragungskomponente (24) direkt berührt bzw. berühren und vorzugsweise vorgespannt an dieser ruht bzw. ruhen.

3. Vorrichtung (20) nach Anspruch 1 oder 2, **dadurch gekennzeichnet, dass** eine wärmeleitfähige Paste zwischen der Wärmeübertragungskomponente (24) und dem elektrischen Heizelement (34) und/oder der Kühlmittelleitung (32) bereitgestellt ist.

4. Vorrichtung (20) nach einem der vorherigen Ansprüche, **dadurch gekennzeichnet, dass** mehrere Wärmeübertragungskomponenten (24), insbesondere Wärmeübertragungskomponenten (24), welche mit einer gemeinsamen Kühlmittelleitung (32) verbunden sind, ein gemeinsames elektrisches Heizelement (34) aufweisen.

5. Vorrichtung (20) nach einem der vorherigen Ansprüche, **dadurch gekennzeichnet, dass** das elektrische Heizelement (34) in einer rohrförmigen Ummantelung, vorzugsweise aus Edelstahl, eingebettet ist.

6. Vorrichtung (20) nach einem der vorherigen Ansprüche, **dadurch gekennzeichnet, dass** die Vorrichtung (20) in Form eines Kühlbodens (22) aufgebaut ist, welcher derart gestaltet ist, dass er flach an einer flachen Seite (18) der Batterie ruht, und welcher ein Haltemittel für die mindestens eine Kühlmittelleitung (32) und das mindestens eine elektrische Heizelement (34) aufweist.

7. Vorrichtung (20) nach Anspruch 6, **dadurch gekennzeichnet, dass** der Kühlboden (22) federnd nachgiebig zu der flachen Seite (18) der Batterie hin ausgebildet ist.

8. Vorrichtung (20) nach Anspruch 6 oder 7, **dadurch gekennzeichnet, dass** die Wärmeübertragungskomponente (24) in Form eines extrudierten Abschnitts oder Profils gestaltet ist.

9. Vorrichtung (20) nach einem der vorherigen Ansprüche, **dadurch gekennzeichnet, dass** sich das elektrische Heizelement (34) in einer U-Form erstreckt, wobei insbesondere die beiden Arme des U-förmigen Heizelements (34) jeweils mit verschiedenen Wärmeübertragungskomponenten (24) verbunden sind.

10. Vorrichtung (20) nach einem der vorherigen Ansprüche, **dadurch gekennzeichnet, dass** die Wärmeübertragungskomponente (24) lokal um das elektrische Heizelement (34) herum eingreift.

11. Vorrichtung (20) nach einem der vorherigen Ansprüche, **dadurch gekennzeichnet, dass** die Wärmeübertragungskomponente (24) eine Kontaktplatte ist.

12. Vorrichtung (20) nach einem der vorherigen Ansprüche, **dadurch gekennzeichnet, dass** die Wärmeübertragungskomponente (24) in Form eines federnd nachgiebigen Teils gestaltet ist und in dem nicht an der Batterie befestigten Zustand konvex nach außen auf der Außenseite davon der Batterie zugewandt ist.

13. Fahrzeugantriebsbatteriebaugruppe (100) mit einer Fahrzeugantriebsbatterie, welche mehrere Batteriezellen (12) aufweist, die nebeneinander angeordnet sind, und mit einer äußeren Seite, einer oberen Endwand und einer unteren Endwand, wobei die Batterie eine flache Seite (18) aufweist, und einer Vorrichtung (20) nach einem der vorherigen Ansprüche, wobei die Vorrichtung (20) mit der mindestens einen Wärmeübertragungskomponente (24) an der flachen Seite (18) der Batterie ruht.

14. Fahrzeugantriebsbatteriebaugruppe (100) nach Anspruch 13, **dadurch gekennzeichnet, dass** eine Wärmeübertragungskomponente (24), insbesondere genau eine Wärmeübertragungskomponente (24), sich jeweils direkt auf der Unterseite einer Batteriezelle (12) oder einer Batteriezellengruppe (10) erstreckt, wobei eine Batteriezellengruppe (10) eine vorgefertigte Einheit ist, die aus mehreren Batteriezellen (12) gebildet ist, und sich eine Kühlmittelzufuhr, ein Kühlmittelrücklauf und ein elektrisches Heizelement (34) unter jeder Batteriezellengruppe (10) entlang erstrecken.

15. Fahrzeugantriebsbatteriebaugruppe (100) nach Anspruch 13 oder 14, **dadurch gekennzeichnet, dass** die Wärmeübertragungskomponente (24) an einem Gehäuse der Batterie befestigt ist und von der Befestigungsvorrichtung (38) gegen die flache Seite (18) der Batterie gedrückt wird, wobei die Wärmeübertragungskomponente (24) vorzugsweise federnd nachgiebig gegen die flache Seite (18) der Batterie, eine Bodenplatte der Batterie oder die Batteriezellen (12) drückt.

16. Fahrzeugantriebsbatteriebaugruppe (100) nach einem der Ansprüche 13 bis 14, **dadurch gekennzeichnet, dass** unter der Vorrichtung (20) eine Druckplatte (102) bereitgestellt ist, welche vorzugsweise an der Batterie befestigt ist und durch welche die Vorrichtung (20) federnd nachgiebig zwischen der Batterie und der Druckplatte (102) verformt wird.

## Revendications

1. Appareil (20) pour chauffer et refroidir une batterie, l'appareil comprenant au moins une batterie de traction de véhicule avec une pluralité de cellules de batterie (12), un circuit de refroidissement qui comprend au moins une conduite de refroidissement (32), au moins un élément de chauffage électrique (34) et au moins un composant de transfert de chaleur commun (24) pour le transfert de chaleur entre la batterie et la conduite de refroidissement (32) et l'élément de chauffage électrique (34), **caractérisé en ce que** ledit au moins un composant de transfert de chaleur commun (24) est relié à l'au moins un élément de chauffage électrique (34) et/ou à au moins une conduite de refroidissement (32) d'une manière verrouillant positivement et/ou non positivement, le composant de transfert de chaleur (24) présentant deux nervures de conduction thermique (30) sur le côté opposé à la batterie, qui est en contact thermoconducteur avec l'élément de chauffage électrique (34), la distance entre les nervures de conduction thermique (30) étant sélectionnée de telle sorte qu'un contact de pression est de préférence formé entre les nervures de conduction thermique (30) et l'élément de chauffage électrique (34), les nervures de conduction thermique (30) étant de forme ronde au moins en partie pour permettre une fixation de l'élément de chauffage électrique (34) sur le composant de transfert de chaleur (24) avec un verrouillage positif.

2. Appareil (20) selon la revendication 1, **caractérisé en ce que** la conduite de refroidissement (32) et/ou l'élément de chauffage (34) viennent en contact avec le composant de transfert de chaleur (24) directement et, de préférence, reposent précontraint contre celui-ci.

3. Appareil (20) selon la revendication 1 ou 2, **caractérisé en ce qu'**une pâte thermoconductrice est prévue entre le composant de transfert de chaleur (24) et l'élément de chauffage électrique (34) et/ou la conduite de refroidissement (32).

4. Appareil (20) selon l'une quelconque des revendications précédentes, **caractérisé en ce qu'**une pluralité de composants de transfert de chaleur (24), en particulier des composants de transfert de chaleur (24) qui sont associés à une conduite de refroidissement commune (32), ont un élément de chauffage électrique commun (34).

5. Appareil (20) selon l'une quelconque des revendications précédentes, **caractérisé en ce que** l'élément de chauffage électrique (34) est intégré dans une enveloppe tubulaire, de préférence en acier inoxydable.

6. Appareil (20) selon l'une quelconque des revendications précédentes, **caractérisé en ce que** l'appareil (20) est construit sous la forme d'une base de refroidissement (22) qui est conçu de telle sorte qu'il repose à plat contre un côté plat (18) de la batterie et qui présente un moyen de retenue pour la ou les conduites de refroidissement (32) et le ou les éléments de chauffage électriques (34).

7. Appareil (20) selon la revendication 6, **caractérisé en ce que** la base de refroidissement (22) est rendue élastique vers le côté plat (18) de la batterie.

8. Appareil (20) selon la revendication 6 ou 7, **caractérisé en ce que** le composant de transfert de chaleur (24) est conçu sous la forme d'une section ou d'un profilé extrudé.

9. Appareil (20) selon l'une quelconque des revendications précédentes, **caractérisé en ce que** l'élément de chauffage électrique (34) s'étend en forme de U, en particulier les deux bras de l'élément de chauffage en forme de U (34) sont associés à différents composants de transfert de chaleur (24) dans chaque cas.

10. Appareil (20) selon l'une quelconque des revendications précédentes, **caractérisé en ce que** le composant de transfert de chaleur (24) s'engage localement autour de l'élément de chauffage électrique (34) .

11. Appareil (20) selon l'une quelconque des revendications précédentes, **caractérisé, en ce que** le composant de transfert de chaleur (24) est une plaque de contact.

12. Appareil (20) selon l'une quelconque des revendications précédentes, **caractérisé en ce que** le composant de transfert de chaleur (24) est conçu sous la forme d'une pièce élastique et, dans l'état non fixé à la batterie, convexe vers l'extérieur sur son côté extérieur faisant face à la batterie.

13. Sous-ensemble (100) de batteries de traction de véhicule, avec une batterie de traction de véhicule qui comprend une pluralité de cellules de batterie (12) disposées de manière adjacente les unes aux autres et présentant une face externe, une paroi d'extrémité supérieure et une paroi d'extrémité inférieure, la batterie ayant un côté plat (18), et un appareil (20) selon l'une quelconque des revendications précédentes, l'appareil (20) reposant sur le ou les composants de transfert de chaleur (24) contre le côté plat (18) de la batterie.

14. Sous-ensemble (100) de batteries de traction de véhicule selon la revendication 13, **caractérisé en ce qu'**un composant de transfert de chaleur (24), en particulier précisément un composant de transfert de chaleur (24), s'étend directement sur le côté inférieur d'une cellule de batterie (12) ou d'un groupe de cellules de batterie (10) dans chaque cas, un groupe de cellules de batterie (10) étant une unité préfabriquée formée à partir d'une pluralité de cellules de batterie (12), et une alimentation en fluide de refroidissement, un retour de liquide de refroidissement et un élément de chauffage électrique (34) s'étendant le long de chaque groupe de cellules de batterie (10).

15. Sous-ensemble (100) de batteries de traction de véhicule selon la revendication 13 ou 14, **caractérisé en ce que** le composant de transfert de chaleur (24) est fixé sur un boîtier de la batterie et est pressé par l'appareil de fixation (38) contre le côté plat (18) de la batterie, le composant de transfert de chaleur (24) pressant de préférence de manière élastique contre le côté plat (18) de la batterie, une plaque de base de la batterie ou les cellules de batterie (12).

16. Sous-ensemble (100) de batteries de traction de véhicule selon l'une quelconque des revendications 13 à 14, **caractérisé en ce que** l'appareil (20) est pourvu, sous celui-ci, d'une plaque de pression (102) qui est de préférence fixée à la batterie et par laquelle l'appareil (20) est élastiquement déformé entre la batterie et la plaque de pression (102).
